# Europäisches Patentamt
## European Patent Office
## Office européen des brevets

(11) Veröffentlichungsnummer: **0 264 488 B1**

(12) # EUROPÄISCHE PATENTSCHRIFT

(45) Veröffentlichungstag der Patentschrift: **03.07.91**

(51) Int. Cl.⁵: **B27K 3/32, B27K 3/30**

(21) Anmeldenummer: **86118114.7**

(22) Anmeldetag: **29.12.86**

(54) Holzschutzmittel.

(30) Priorität: 15.09.86 DD 294408
05.12.86 DD 297085

(43) Veröffentlichungstag der Anmeldung:
**27.04.88 Patentblatt 88/17**

(45) Bekanntmachung des Hinweises auf die
Patenterteilung:
**03.07.91 Patentblatt 91/27**

(84) Benannte Vertragsstaaten:
**AT BE CH DE FR GB IT LI LU NL SE**

(56) Entgegenhaltungen:
**EP-A- 0 139 142**

(73) Patentinhaber: **DESOWAG Materialschutz GmbH**
**Rossstrasse 76 Postfach 32 02 20**
**W-4000 Düsseldorf 30(DE)**

(72) Erfinder: **Möwius, Frank**
**Köpenicker Strasse 17**
**O-1185 Berlin(DE)**
Erfinder: **Meisel, Manfred**
**Strasse 53, Nr. 5a**
**O-1113 Berlin(DE)**
Erfinder: **Grunze, Herbert**
**Hirschsprung 2**
**O-1162-Berlin(DE)**
Erfinder: **Kolditz, Lothar**
**Homeyerstrasse 21**
**O-1110 Berlin(DE)**
Erfinder: **Zeibig, Marina**
**August-Bebel-Strasse 29**
**O-1251 Wernsdorf(DE)**
Erfinder: **Oese, Walfried**
**Anna-Hirsch-Strasse 9**
**O-8313 Dohna(DE)**
Erfinder: **Standfuss, Dietmar**
**Anna-Hirsch-Strasse 7**
**O-8313 Dohna(DE)**

Erfinder: **Kirk, Horst**
**Ernst-Schneller-Strasse 12**
**O-1300 Eberswald-Finow 1(DE)**
Erfinder: **Hesse, Reiner**
**Am Pfingstberg 19**
**O-1300 Eberswalde-Finow 1(DE)**
Erfinder: **Götze, Horst**
**Walter-Rathenau-Strasse 6**
**O-1300 Eberswalde-Finow 1(DE)**
Erfinder: **Unger, Wibke**
**Waldesruh 12**
**O-1300 Eberswalde-Finow 1(DE)**

(74) Vertreter: **Seiler, Siegfried**
**Langhansstrasse 6**
**W-5650 Solingen 11(DE)**

## Beschreibung

Die Erfindung betrifft ein Holzschutzmittel auf der Basis auslaugstabiler, anorganischer Verbindungen zum Schutz von Nutzholz, unabhängig vom Feuchtegehalt, gegen holzzerstörende Insekten und Pilze, einschließlich Moderfäulepilze. Das zu schützende Nutzholz kann sowohl in gedeckten Räumen als auch im Freien, dabei in der Erd-Luft-Zone und/oder ständig Witterungseinflüssen ausgesetzt, verbaut sein.

Zum Schutz von Holz gegen Zerstörung durch Insekten und/oder Pilze sind bereits zahlreiche anorganische Holzschutzmittel bekannt.

Die Verfahren zum Einbringen der Schutzmittel in das Holz, beispielsweise Trogtränk-, Kesseldruck-, Pasten-, Sprüh-oder Anstrichverfahren, sind ebenfalls bekannt. Als "klassische" Holzschutzmittel auf der Basis anorganischer Verbindungen sind Gemische aus Chrom-und Fluorverbindungen, die sogenannten CF-Salze, bekannt (s.a. ULLMANN's Encyklopädie der technischen Chemie, 4, Auflage, Band 12, Verlag Chemie, Weinheim 1976, Stichwort Holzschutz, S. 685). Zur Erhöhung der insektiziden Wirkung solcher Mittel werden für Warmblüter hochgiftige Arsenverbindungen zugesetzt (CFA-Salze). Die genannten Schutzsalze sind z.B. Gemische aus Natriumfluorid und Kaliumdichromat gegebenenfalls mit Kalium-oder Natriumarsenat, Leichter lösliche Schutzsalzgemische enthalten zusätzlich Kaliumhydrogenfluorid. Als Wirkstoffe gegen holzzerstörende Insekten und Pilze fungieren dabei die Fluor-und die Arsenverbindungen. Die Chromate bzw. Dichromate sind weder insektizid noch fungizid wirksam, sie sind aber zur Fixierung der Fluoride in Form von Alkalichromfluoriden (Chromkryolithe) bzw. der Arsenate als Chromarsenate unbedingt erforderlich, da auf diese Weise durch Wasser schwer auslaugbare Verbindungen im Holz festgelegt werden.

Durch das Chrom wird weiterhin eine zweite ebenso wichtige Funktion, nämiich die Herabsetzung der Korrosion gegenüber Eisen-und Stahlwerkstoffen durch die Schutzsalzlösungen, realisiert. Für Fixierung und Korrosionsminderung müssen beträchtliche, fungizid und insektizid unwirksame Chrommengen aufgewendet werden.

Die bisher genannten anorganischen Holzschutzsalzgemische können zwar gegen Schädigungen durch verschiedenartigste holzzerstörende Insekten und Pilze schützen, jedoch ist durch sie kein Schutz gegen Moderfäulepilze vorhanden. Dazu bedarf es einer Behandlung mit Schutzsalzgemischen, die auch Wirkstoffe gegen Moderfäulepilze enthalten. Als solche anorganischen Wirkstoffe sind insbesondere Verbindungen von Kupfer, weiterhin von Zink, Nickel und Kobalt sowie der starken Gifte Kadmium und Quecksilber bekannt.

Die notwendige Fixierung der moderfäulewirksamen Komponente im Holze erfolgt in vielen bekannten Holzschutzmitteln ebenfalls durch Chrom in Form von z.B. Kupferchromaten (sogenannte CK-Salze), gebräuchlich in Kombination mit weiteren insektiziden und fungiziden Wirkstoffen wie Arsen (CKA-) oder Bor (CKB-) oder Fluor (CKF-Salze), s.a. ULLMANN's Encyklopädie .., S. 687. Ein CKF-Salz-Holzschutzmittel auf der Basis von komplexen Silico-oder Borfluoriden, Kupfersalzen und Ammoniumchromat oder -dichromat wird in der DE-AS 1.492.509 beschrieben.

Es sind auch Patentschriften über Holzschutzmittel gegen Moderfäulepilze auf der Basis von Kupfer und/oder Zink bekannt, die kein Chrom enthalten. In der DE-AS 3.032.463 A1 sind Holzschutzmittel auf der Basis von Kupfer-und/oder Zinksalzen schwacher Säuren wie Essig-, Propion-, Butter-oder anderer Säuren beschrieben, in der DE-AS 2.202.448 Schutzmittel auf der Basis von Kupfer, Ammoniak, Kohlendioxid und Fettsäuren sowie in der DE-OS 2.418.859 Holzschutzmittel auf der Basis von Kupfer oder einem anderen aminbildenden Metall, wie Zink, Kobalt oder Nickel, von Aminen, Kohlendioxid und Polyphosphaten.

Aus der EP-A 139 142 ist ein Holzschutzmittel auf Basis von Alkali-bzw. Ammoniummonofluorophosphaten bekannt, das jedoch zur auslaugstabilen Fixierung im Holz eine zusätzliche Komponente erforderlich macht.

Der Erfindung liegt die Aufgabe zugrunde, ein Holzschutzmittel auf der Basis anorganischer Verbindungen in wäßrigen Lösungen zu entwickeln, das Monofluorophosphate mehrwertiger Metalle enthält und mit dem, unter Vermeidung des Einsatzes von Chromverbindungen, ein auslaugstabiler Schutz von Nutzholz, unabhängig vom Feuchtegehalt, gegen holzzerstörende Insekten und Pilze, einschließlich Moderfäulepilze, und auch eine korrosionsmindernde Wirkung gegenüber Eisenwerkstoffe möglich ist und das darüber hinaus wesentlich billiger ist.

Es wurde ein Holzschutzmittel auf der Basis anorganischer Verbindungen zum Schutz von Nutzholz, unabhängig vom Feuchtegehalt, gegen holzzerstörende Insekten und Pilze, einschließlich Moderfäulepilze, gefunden. Dieses Holzschutzmittel ist dadurch gekennzeichnet, daß es 0,5 bis 10 Masse-% von einem oder mehreren der Bestandteile Ammoniak, Salz-, Salpeter-, Schwefel-, Flußsäure, Alkali- oder Ammoniumhydrogenfluorid und als wirksame Komponente

a) ein Kupfer (II)-, Zink-, Nickel-, Kobalt-, Eisen-, Magnesium-und/oder Mangansalz der Monofluoro-

phosphorsäure $H_2PO_3F$ mit einem Gehalt von 0,5 bis 20 Masse-%
oder

b) ein Alkali-und/oder Ammonium-Salz der Monofluorophosphorsäure in Gegenwart eines Zink-, Nickel-, Kobalt-, Eisen-, und/oder Mangansalzes der Salz-, Salpeter-oder Schwefelsäure wobei der Gehalt der wirksamen Komponente zwischen 1,0 und 30,0 Masse-% beträgt oder

c) ein Alkali- und/oder Ammoniumsalz der Monofluorophosphorsäure in Gegenwart eines CU(II)-Salzes der Salz-, Salpeter-oder Schwefelsäure in einem Verhältnis $Cu^{2+}$ zu $PO_3F^{2-}$ von 0,5 bis 2 zu 1, vorzugsweise 1 zu 1, wobei der Gehalt der wirksamen Komponente zwischen 1,0 und 30,0 Masse-% beträgt, enthält. Die wirksame Komponente liegt in einer wäßrigen, tränkstabilen Lösung vor.

Als Metallsalz wäre auch das Kadmiumsalz wirksam, ist jedoch wegen seiner umweltschädigenden Wirkung insgesamt nicht geeignet.

Bevorzugt kann das Holzschutzmittel als Metallsalz enthalten

- Dreikomponentengemische von einem Cu-, Zn-und Mn-Salz, einem Cu-, Zn-und Mg-Salz, einem Mn-, Zn-und Mg-Salz oder einem Co-, Ni-und Zn-Salz.
- Zweikomponentengemische von einem Cu-und Zn-Salz. einem Cu-und Mg-Salz. einem Zn-und Mg-Salz oder einem Mn-und Zn-Salz, gegebenenfalls in Anwesenheit eines Alkali-und/oder Ammoniumsalzes der Monofluorophosphorsäure,
oder
- ein Cu-oder Zn-oder Ni-oder Co-Salz.

Ferner kann es als Alkalisalz bevorzugt ein Na-oder K-Salz enthalten.

Weiterhin kann es als wirksame Komponente bevorzugt enthalten

- ein Ammoniumsalz der Monofluorophosphorsäure in Gegenwart eines Cu-, Zn-, Ni-, Co-, Fe-, und/oder Mn-Salzes der Salz-, Salpeter-oder Schwefelsäure,
oder
- ein Kaliumsalz der Monofluorophosphorsäure in Gegenwart eines Cu-Salzes der Salz-oder Schwefelsäure.

Zur Erhöhung der Löslichkeit der wirksamen Komponente kann als Säure bevorzugt Salz-oder Schwefelsäure verwendet werden. Unter Cu-, Zn-, Ni-, Co-, Fe-, Mg-und Mn-Salz oder Monofluorophosphorsäure sind sowohl die einzelnen Salze dieser Säure nebeneinander als auch Doppelsalze von zwei oder mehreren Kationen zu verstehen.

Zu den unter a) genannten Cu(II)-Salzen der Monofluorophosphorsäure sind auch solche wie das Cu-K-monofluorophosphat zu rechnen.

Besonders bevorzugte erfindungsgemäße Holzschutzmittel, bei denen eine auslaugstabile Fixierung ohne Chromzusatz möglich ist, sind solche, die als wirksame Komponenten Kupfer-($Cu^{2+}$)-und Zink-($Zn^{2+}$)-und Monofluorophosphat-Ionen ($PO_3F^{2-}$) in einem Verhältnis von ($Cu^{2+}$ + $Zn^{2+}$): $PO_3F^{2-}$ = 0,5 bis 2:1, vorzugsweise 1:1, und in einem Verhältnis von $Zn^{2+}$: $Cu^{2+}$ = 10 bis 60 :90 bis 40, vorzugsweise 20 bis 50 80 bis 50 enthalten und die zusätzlich einen oder mehrere Bestandteile der Gruppe Ammoniak, Salzsäure, Salpetersäure, Schwefelsäure, Flußsäure, Alkalihyrogenfluorid und Ammoniumhydrogenfluorid enthalten.

Unter den besonders bevorzugten Holzschutzmitteln ist das bevorzugteste ein solches, das als wirksame Stoffe die Verbindungen Kalium-dikupfer-hydroxid-bis(monofluorophosphat)-1-Hydrat

$$Cu_2K(OH)(PO_3F)_2 . H_2O$$

und Zinkmonofluorophosphat-2,5-Hydrat

$$ZnPO_3F . \tfrac{5}{2} H_2O$$

enthält. Es kann auch bevorzugt die neue Mischkristallverbindung

$$(Cu_{2m}.Zn_m)K(OH)(PO_3F)_2 . H_2O$$

enthalten, in der ausgehend vom Wirtskristallgitter des $Cu_2K(OH)(PO_3F)_2 . H_2O$ das Kupfer teilweise durch Zink substituiert ist und wobei m kleiner als eins und größer als null ist.

Der Gehalt der wirksamen Komponente Kupfer(II)-, Zink-, Nickel-, Kobalt-, Eisen-, Magnesium-und/oder Mangan-Salz der Monofluorophosphorsäure kann zwischen -,5 und 20,0 Masse-%, vorzugsweise zwischen 2,0 und 15,0 Masse-%, insbesondere zwischen 2,0 und 8,0 Masse-%, und der der wirksamen Komponente Alkali-und/oder Ammonium-Salz der Monofluorophosphorsäure und Kupfer(II)-, Zink-, Nickel-, Kobalt, Eisen-, und/oder Mangan-Salz der Salz-, Salpeter-oder Schwefelsäure zwischen 1,0 und 30,0 Masse-%, vorzugsweise zwischen 2,0 und 15,0 Masse-%, betragen.

Die wäßrige Lösung der Mittel enthält zusätzlich zwischen 0,5 und 10 Masse-%, vorzugsweise zwischen 1,0 und 5,0 Masse-%, insbesondere zwischen 1,0 und 3,0 Masse-%, Ammoniak, Salz-,Salpeter-, Schwefel- oder Flußsäure oder Alkali-oder Ammoniumhydrogenfluorid.

Die erfindungsgemäßen Wirkstoffe erhält man auf bekannte Weise. Das bereits genannte kristalline basische Kupfer-Kalium-Monofluoromonophosphat der Formel $Cu_2K(OH)(PO_3F)_2.H_2O$ erhält man in technisch einfacher Weise, wenn man Monofluoromonophosphorsäure oder ein primäres oder sekundäres Salz dieser Säure mit einem Kupfer(II)-Salz in Gegenwart von Kaliumionen umsetzt. Die Umsetzung erfolgt im wäßrigen Medium bei einer Reaktionstemperatur von vorzugsweise 5 bis 35 °C, insbesondere 15 bis 25 °C, vorzugsweise unter Zusatz einer Base wie Kaliumhydroxid.

So erhält man basisches Kupfer-Kalium-Monofluoromonophosphat vorzugsweise, wenn man Kaliummonofluoromonophosphat $K_2PO_3F$ mit wasserlöslichen Kupfersalzen, wie Kupferchlorid oder -nitrat oder -sulfat, in Wasser z.B. im molaren Verhältnis $PO_3F^{2-}:Cu^{2+} = 1:1$ umsetzt. Die gewünschte Verbindung ist in Wasser schwer löslich und fällt deshalb mit dem Zusetzen der einen zur anderen Ausgangslösung aus.

Man kann aber auch basisches Kupfer-Kalium-Monofluoromonophosphat durch Umsetzung von Natrium-oder Ammoniummonofluoromonophosphat mit wasserlöslichen Kupfersalzen, wie Kupferchlorid oder -nitrat oder -sulfat, in Gegenwart von löslichen Kaliumsalzen, wie z.B. Kaliumchlorid oder -nitrat oder -sulfat, erhalten.

Werden Monofluoromonophosphate von Erdalkali, Blei oder z.B. Silber mit Kupfersalzen in Gegenwart von Kaliumsalzen umgesetzt, so kann ebenfalls basisches Kupfer-Kalium-Monofluoromonophosphat isoliert werden. Das basische Kupfer-Kalium-Monofluoromonophosphat läßt sich auch unter Verwendung von Monofluoromonophosphorsäure herstellen. Man setzt dann vorzugsweise als Kupfersalz Kupfercarbonat oder -hydroxid oder -oxid oder basisches Kupfercarbonat ein und führt die Umsetzung in Gegenwart eines löslichen Kaliumsalzes sowie gegebenenfalls unter Zusatz einer Base, vorzugsweise Kaliumhydroxid durch. Schließlich wurde gefunden, daß man basisches Kupfer-Kalium-Monofluoromonophosphat auch durch Umsetzung der Ausgangskomponenten Monofluoromonophosphorsäure oder primäres oder sekundäres Salz dieser Säure mit einem Kupfersalz in Gegenwart von Kaliumionen in einem organischen Lösungsmittel erhält, wenn wenigstens eine der Ausgangsverbindungen in diesem Lösungsmittel löslich ist und stöchiometrische Mengen an Wasser, z.B. aus einem Kupfersalz-Hydrat, anwesend sind. So läßt sich die gewünschte Verbindung beispielsweise durch Umsetzung von Kaliummonofluoromonophosphat mit Cu-$(NO_3)_2.3H_2O$ in Methanol bei einer Reaktionstemperatur von 20 °C bis 65 °C, vorzugsweise 50 °C bis 65 °C, herstellen.

Die erfindungsgemäß bevorzugte neue Mischkristallverbindung $(Cu_{2m}, Zn_m)K(OH)(PO_3F)_2 . H_2O$ kann man erhalten, indem Monofluorophosphorsäure $H_2PO_3F$ oder primäre oder sekundäre Salze dieser Säure mit einem Kupfer(II)-und Zinksalz in Gegenwart von Kaliumionen in wäßriger Lösung umgesetzt werden. Bevorzugt wird sie hergestellt, indem Kaliummonofluorophosphat $K_2PO_3F$ mit wasserlöslichen Kupfer-und Zinksalzen, wie den Chloriden, Nitraten oder Sulfaten, umgesetzt wird. Diese Mischkristallverbindung kristallisiert in der Kristallstruktur der reinen Kupferverbindung $Cu_2K(OH)(PO_3F)_2 . H_2O$. Der durch Kupfer substituierte Zinkanteil m, der $0<m<1$ ist, also gegen 50 Mol-% geht, ist abhängig vom $Cu^{2+} : Zn^{2+}$-Verhältnis in der Fällungslösung.

Einfache anorganische Verbindungen wie z.B. Natriumfluorid und Kupfer(II)-sulfat weisen zwar die erforderlichen fungiziden Grenzwerte auf (s. Tabelle 1), sie werden jedoch leicht aus dem Holz ausgelaugt (z.B. 82 % des eingebrachten Kupfersulfats, s. ULLMANN's Encyklopädie ..., S. 689).

Überraschenderweise wurde gefunden daß Kupfer(II)-, Zink-, Nickel-, Kobalt-, Eisen-, Magnesiumund/oder Mangansalze der Monofluorophosphorsäure $H_2PO_3F$ nach dem Einbringen in das Holz auslaugstabil fixiert werden und Nutzholz wirksam gegen Schädigungen durch holzzerstörende Insekten und Pilze einschließlich Moderfäulepilze schützt (Tabelle 1-Grenzwerte der pilzwidrigen Wirksamkeit bekannter und der erfindunngsgemäßen Holzschutzmittel).

Es wurde weiterhin gefunden, daß anstelle von Monofluorophosphaten der genannten Metalle auch Gemische von Alkali-und/oder Ammoniummonofluorophosphaten mit löslichen Salzen dieser Metalle verwendet werden können, die biozide Wirksamkeiten und Fixierungsverhalten wie die Monofluorophosphate der mehrwertigen Metalle aufweisen. Besonders hervorzuheben ist, daß die erfindungsgemäßen Holzschutzmittel ohne Chromzusatz im Holz fixiert werden.

Wie der Vergleich der fungiziden Grenzwerte für NaF bzw. z.B. $CuSO_4.5 H_2O$ mit denen der erfindunngsgemäßen Holzschutzmittel zeigt, werden die Aufwandmengen bezogen auf die gegen Basidiomyceten wirksame Komponente Fluor bzw. die gegen Moderfäulepilze wirksame Komponente z.B. Kupfer und Zink bei Verwendung der erfindungsgemäßen Holzschutzmittel z.T. erheblich verringert (Tabelle 2), was die Folge eines synergistischen Effektes der P-F-Bindung im Monofluorophosphat bzw. der komplexen Bindung des z.B. Kupfers oder Zinks im Monofluorophosphat ist. Es tritt aber auch offensichtlich darüber hinaus ein weiterer synergistischer Effekt bei den bevorzugten Cu-Zn-K-monofluorophosphat-Kombinationen auf, da die Einzelwirkungen des Cu-K-monofluorophosphats und des Zn-monofluorophosphats jeweils für sich zwar sehr gut aber nicht so gut sind wie die der Cu-Zn-K-Kombination.

Die Holzschutzmittel sind umweltfreundlich; mit Ausnahme der ammoniakhaltigen sind sie geruchlos. Die Lösungen besitzen ein gutes Eindringvermögen in das Holz. Magnesium-und Zinksalze lassen das Holz farblos. Wenn Metalle verwendet werden, die farbige Komplexsalze bilden, erfolgt eine geringfügige Verfärbung des getränkten Holzes. Die erfindungsgemäßen Holzschutzmittel sind für die Tränkung von Holz unterschiedlichen Feuchtegehaltes und sowohl für den Erst-als auch den Nachschutz geeignet.

Das Korrosionsverhalten der ammoniakalischen Holzschutzmittellösungen gegenüber Eisenwerkstoffen ist nicht oder schwach korrodierend. Neutrale und saure Kupfersalzlösungen lösen dagegen naturgemäß Eisen auf. Hydrogenfluoridhaltige Lösungen korrodieren Eisenwerkstoffe erwartungsgemäß sehr stark, Das Korrosionsverhalten gegenüber Kupferwerkstoffen ist umgekehrt: während ammoniakalische Lösungen eine Auflösung des Kupfers bewirken, korrodieren neutrale und saure bzw. hydro genfluoridhaltige Lösungen Kupfer mäßig.

Schließlich sind die erfindungsgemäßen Holzschutzmittel zuch wirksam gegenüber Termiten. Die Wirksamkeit ist von der Konzentration abhängig. So werden z.B. durch Anwendung einer 5 Masse-%igen Lösung des Wirkstoffs $Cu_2K(OH)(PO_3F)_2 \cdot H_2O$ in Ammoniaklösung nach 14 Tagen Versuchsdauer 80 % der Arbeitstermiten und 90 % ihrer Darmsymbionten abgetötet ein relativer Masseverlust an den Prüfkörpern ist nicht meßbar, lediglich visuell ist ein sehr geringer Fraß feststellbar.

Besonders günstige Wirkungen werden mit den erfindungsgemäßen Holzschutzmitteln erzielt, die als wirksame Komponente Cu-, Zn-und Monofluorophosphate-Ionen in einem Verhältnis von $(Cu^{2+} + Zn^{2+})$ : $PO_3F^{2-}$ = 0,5 bis 2:1 in der bereits weiter oben dargestellten Form enthalten. Diese Mittel liegen in ihrer Wirksamkeit nach Auslaugbeanspruchung des Holzes durch Wasser gegen Moderfäulepilze wie Chaetomium globosum unter 1 kg Holzschutzmittel/m³ Holz und gegen Basidiomyceten wie Coniophora puteana bei 3 kg/m³, wobei sie auslaugstabil fixieren und keine umweltschädigende Wirkung ausüben.

Die erfindungsgemäßen Holzschutzmittel, die in wäßriger Lösung vorliegen, können weitere Komponenten enthalten, wie z.B. bekannte biozide Verbindungen, Netzmittel, Farbstoffe und ähnliche Stoffe.

Die Erfindung soll im folgenden durch Beispiele näher erläutert werden.

Ausführungsbeispiele

Nachfolgend sind Beispiele für erfindungsgemäß zusammengesetzte Holzschutzmittel aufgeführt (%-Angaben in Masse-%):

Beispiel 1

In 94,0 g Wasser werden zuerst 6,0 g Ammoniak conz. (25 %ig) eingetragen und danach 3,0 g $Cu_2K(OH)(PO_3F)_2 \cdot H_2O$ (Produkt, das gemäß Beispiel 31 erhältlich ist) aufgelöst. Die Lösung ist danach gebrauchsfertig.

Bei den weiteren Beispielen wird ebenfalls Wasser vorgelegt und in der angegebenen Reihenfolge zugegeben und aufgelöst:

Beispiel 2

98,0 g Wasser
2,0 g $H_2SO_4$ conz.
3,0 g $Cu_2K(OH)(PO_3F)_2 \cdot H_2O$

Beispiel 3

100,0 g Wasser
2,0 g $NaHF_2$
1,0 g $Cu_2K(OH)(PO_3F)_2 \cdot H_2O$

Beispiel 4

90,0 g Wasser

10,0 g Ammoniak conz.
3,75 g $CuSO_4.5H_2O$
2,64 g $K_2PO_3F$

Beispiel 5

    95,0 g Wasser
2,58 g $NH_4HF_2$
3,75 g $CuSO_4.5H_2O$
2,64 g $K_2PO_3F$

Beispiel 6

    100,0 g Wasser
3,0 g HCl conz.
2,56 g $CuCl_2.2H_2O$
2,16 g $Na_2PO_3F$

Beispiel 7

    100,0 g Wasser
1,0 g $H_2SO_4$ conz.
3,75 g $CuSO_4.5H_2O$
2,01 g $(NH_4)_2PO_3F$

Beispiel 8

    92,0 g Wasser
8,0 g Ammoniak conz.
3,75 g $CuSO_4.5H_2O$
2,01 g $(NH_4)_2PO_3F$

Beispiel 9

    92,0 g Wasser
8,0 g Ammoniak conz.
3,0 g $ZnPO_3F.2,5\ H_2O$

Beispiel 10

    100,0 g Wasser
0,5 g $KHF_2$
2,0 g $ZnPO_3F.2,5\ H_2O$

Beispiel 11

    94,0 g Wasser
6,0 g Ammoniak conz.
3,0 g $(Cu_{1,44}Zn_{0,57})K(OH)(PO_3,F)_2.H_2O$ (Produkt. das gemäß Beispiel 33 erhältlich ist)

Beispiel 12

    94,0 g Wasser
6,0 g Ammoniak conz.
0,63 g $ZnPO_3F.2,5\ H_2O$
2,38 g $Cu_2K(OH)(PO_3F)_2.H_2O$

Beispiel 13

7

92,0 g Wasser
8,0 g Ammoniak conz.
1,56 g $ZnPO_3F.2,5H_2O$
1,50 g $Cu_2K(OH)(PO_3F)_2.H_2O$

Beispiel 14

92,0 g Wasser
8,0 g Ammoniak conz.
2,64 g $K_2PO_3F$
0,87 g $ZnSO_4.7H_2O$
3,00 g $CuSO_4.5H_2O$

Beispiel 15

100,0 g Wasser
1,5 g $KHF_2$
2,16 g $Na_2PO_3F$
0,90 g $Zn(NO_3)_2.6H_2O$
2,90 g $Cu(NO_3)_2.3H_2O$

Beispiel 16

100,0 g Wasser
1,50 g $H_2SO_4$ conz.
2,01 g $(NH_4)_2PO_3F$
1,49 g $Zn(NO_3)_2.6H_2O$
1,70 g $CuCl_2.2H_2O$

Beispiel 17

100,0 g Wasser
1,30 g $NH_4HF_2$
2,64 g $K_2PO_3F$
2,15 g $ZnSO_4.7H_2O$
1,88 g $CuSO_4.5H_2O$

Beispiel 18

94,0 g Wasser
6,0 g Ammoniak conz.
4,0 g $NiPO_3F.7H_2O$

Beispiel 19

90,0 g Wasser
10,0 g Ammoniak conz.
5,0 g $CoPO_3F.6H_2O$

Beispiel 20

100,0 g Wasser
2,5 g $H_2SO_4$ conz.
3,0 g $MnPO_3F.4H_2O$

Beispiel 21

100,0 g Wasser

8

3,0 g HNO$_3$ conz.
4,0 g Fe$_2$(PO$_3$F)$_3$.12H$_2$O

Beispiel 22

100,0 g Wasser
3,94 g NiSO$_4$.6H$_2$O
2,64 g K$_2$PO$_3$F

Beispiel 23

90,0 g Wasser
10,0 g Ammoniak conz.
2,16 g Na$_2$PO$_3$F
4,46 g Zn(NO$_3$)$_2$.6H$_2$O

Beispiel 24

100,0 g Wasser
2,64 g K$_2$PO$_3$F
3,35 g MnSO$_4$.4H$_2$O

Beispiel 25

100,0 g Wasser
2,64 g K$_2$PO$_3$F
4,37 g Co(NO$_3$)$_2$.6H$_2$O

Beispiel 26

100,0 g Wasser
5,5 g HCl conz.
2,16 g Na$_2$PO$_3$F
4,17 g FeSO$_4$.7H$_2$O

Beispiel 27

90,0 g Wasser
10,0 g Ammoniak conz.
2,0 g NH$_4$Cl
1,0 g ZnPO$_3$F.2,5H$_2$O
1,0 g Mg(NH$_4$)$_2$(PO$_3$F)$_2$.2H$_2$O
1,0 g Cu$_2$K(OH)(PO$_3$F)$_2$.H$_2$O

Beispiel 28

94,0 g Wasser
6,0 g Ammoniak conz.
2,01 g (NH$_4$)$_2$PO$_3$F
1,50 g Zn(NO$_3$)$_2$.6H$_2$O
1,45 g Co(NO$_3$)$_2$.6H$_2$O
1,30 g NiSO$_4$.6H$_2$O

Beispiel 29

92,0 g Wasser
8,0 g Ammoniak conz.
1,5 g NH$_4$Cl

2,0 g $Cu_2K(OH)(PO_3F)_2.H_2O$

1,0 g $Mg(NH_4)_2(PO_3F)_2.2H_2O$

Beispiel 30

94,0 g Wasser

6,0 g Ammoniak conz.

1,6 g $NH_4Cl$

1,52 g $MgCl_2.6H_2O$

1,50 g $ZnPO_3F.2,5H_2O$

1,32 g $K_2PO_3F$

Das folgende Beispiel bezieht sich auf die Herstellung von basischem Kupfer-Kalium-Monofluorphosphat $Cu_2K(OH)(PO_3F)_2.H_2O$.

Beispiel 31

Zu einer Lösung von 52,85 g $K_2PO_3F$ (0,3 mol) in 250 ml $H_2O$ wird eine Lösung von 51,15 9 $CuCl_2.2H_2O$ (0,3 mol) in 250 ml $H_2O$ zugetropft. Der ausgefallene Rückstand wird abgesaugt, mit Wasser chloridfrei gewaschen und über Silicagel getrocknet. Ausbeute: 37,83 g (63,8 % des eingesetzten Phosphors). Analyse: $Cu_2K(OH)(PO_3F)_2.H_2O$. Mm = 397,16, Cu:31,30 (ber.32,00); K:9,97(9,85); P:15,53-(15,60); F:9,14(9,57); Cl:0,08(0) %.

Die Verbindung kristallisiert in der monoklinen Raumgruppe B2/m mit a = 9,094 Å, b = 7,755 Å, c = 6.333 Å, $\alpha = \beta = 90°$ $\gamma = 117,55°$ und Z = 2.

Die folgenden drei Beispiele sollen die Herstellung von basischem Kupfer-Zink-Kalium-Monofluorophosphat $(Cu_{2-m}, Zn_m)K(OH)(PO_3F)_2.H_2O$ näher erläutern.

Beispiel 32

12,3 g (70 mmol) $K_2PO_3F$ werden in 60 ml $H_2O$ gelöst und tropfenweise unter Rühren mit einer Lösung von 8,5 g (50 mmol) $CuCl_2.2H_2O$ und 6,0 g (20 mmol) $Zn(NO_3)_2.6H_2O$ in 60 ml $H_2O$ versetzt. Der ausgefallene Niederschlag wird mit Wasser chlorid-und nitratfrei gewaschen und über Silicagel bis zur Gewichtskonstanz getrocknet. Ausbeute: 8,8 g (61,6 % des eingesetzten Phosphors). Analyse siene nach Beispiel 34.

Beispiel 33

Wie unter Beispiel 32 beschrieben, wurde der folgende Ansatz durchgeführt:

10,6 g (60 mmol) $K_2PO_3F$ in 50 ml $H_2O$ sowie

5,1 g (30 mmol) $CuCl_2.2H_2O$ und

8,9 g (30 mmol) $Zn(NO_3)_2.6H_2O$ in 50 ml $H_2O$.

Ausbeute: 6,7 g (54,6 % des einges. Phosphors).

Analyse siehe nach Beispiel 34.

Beispiel 34

Wie unter Beispiel 32 beschrieben, wurde der folgende Ansatz durchfegührt:

10,6 g (60 mmol) $K_2PO_3F$ in 50 ml $H_2O$ sowie

4,3 g (25 mmol) $CuCl_2.2H_2O$ und

10,4 g (35 mmol) $Zn(NO_3)_2.6H_2O$ in 50 ml $H_2O$.

Ausbeute: 6,1 g (49,6 % des einges. Phosphors).

Die papierchromatographische Untersuchung der gemäß Beispiele 32 bis 34 erhaltenen Produkte ergab, daß die Produkte aus reinem Monofluorophosphat bestehen. Durch röntgenographische Analyse wurde ermittelt, daß die drei Produkte mit der zinkfreien Verbindung $Cu_2K(OH)(PO_3F)_2.H_2O$ isotyp sind. Aus den Analysenergebnissen wurde das Kupfer:Zink:Phosphor-Verhältnis sowie die Größe von m in der allgemeinen Formel für jedes Produkt berechnet und den Ausgangsatomverhältnissen in der Fällungslösung gegenübergestellt:

| Beispiel | Cu:Zn:P-Verhältnis der Fällungslösung | Cu:Zn:P-Verhältnis des Fällungsproduktes | $(Cu_{2-m},Zn_m)K(OH)(PO_3F)_2 \cdot H_2O$ $m=$ |
|---|---|---|---|
| 32 | 1,43:0,57:2 | 1,75:0,26:2 | 0,26 |
| 33 | 1 : 1 :2 | 1,44:0,57:2 | 0,57 |
| 34 | 0,83:1,17:2 | 1,29:0,70:2 | 0,70 |

Tabelle 1

Grenzwerte der pilzwidrigen Wirksamkeit in kg Holzschutzmittel pro $m^3$ Holz[1]

| | Prüfpilz | | | |
|---|---|---|---|---|
| | Coniophora puteana | | Chaetomium globosum | |
| Holzschutz-mittel | ohne Be-lastung | nach Aus-laugung | ohne Be-lastung | nach Aus-laugung |
| CKF-Salz-Typ[a] | 2,8-4[b] | 10-12[b] | 5-10[c] | 6[c] |
| $CuSO_4 \cdot 5H_2O$[a] | - | - | 4[c] | ca.15[c] |
| NaF | 0,4-0,6 | - | - | - |
| Ausführungs-beispiel: 1 | 0,3 | 3,4-6,5 | 0,4-0,9 | < 0,3 |
| 2 | 1,0-2,0 | > 10 | 0,2-0,3 | < 0,3 |
| 3 | < 0,2 | 8-12(10)[d] | 0,6-0,9 | < 0,9 |
| 4 | < 1,3 | > 7 | 6,4 | 3,5-6,3 |
| 5 | < 1,9 | > 10 | 1,8-2,5 | 1,8-2,7 |
| 6 | 3,2 | 19 | 2,8 | 2,1 |
| 7 | > 1(3) | 11-22(15) | 0,2-0,3 | < 0,9 |
| 9 | > 1(2) | 3,9-7,5 | 0,4-0,6 | 0,9-1,8 |
| 10 | 0,9 | 1,2 | < 2,8 | < 5,4 |
| 11 | - | 0,8-3,8(2,8) | - | < 0,6 |

Anmerkungen zu Tabelle 1 und 2:
a) Literaturwerte aus ULLMANN's Encyklopädie ..., S. 688
b) Grenzwerte für Braunfäulepilze allgemein
c) Grenzwerte für Moderfäulepilze allgemein
d) Werte in Klammern bedeuten Trend des Grenzwertes

< Grenzwert ist kleiner als der angegebene Wert

> Grenzwert ist größer als der angegebene Wert

1) Die Prüfung der fungiziden Wirksamkeit wurde nach der Normvorschrift TGL 14140/01-02 "Bestimmung der Schutzwirkung von Prüfsubstanzen gegen holzzerstörende Pilze in Kolleschalen, Laborprüfung mit Braun-und Weißfäulepilzen (TGL 14140/01)" bzw. "Laborprüfung mit Schimmelpilzen (TGL 14140/02)" durchgeführt.

Das Prüfverfahren dient zum Nachweis des Grenzwertes der pilzwidrigen Wirksamkeit von Prüfsubstanzen. Der Grenzwert ist diejenige Prüfsubstanzaufnahme in kg pro m³ Holz, die gerade ausreicht, um eine Zerstörung des Holzes durch Pilze zu unterbinden. Der Schutz des Holzes wird dann als ausreichend angesehen, wenn kein Prüfkörper einer Konzentrationsreihe einen Masseverlust größer als 3 % aufweist.

Zur näheren Charakterisierung wird der Grenzwert durch die beiden Aufnahmemassen an Prüfsubstanz in kg pro m³ Holz festgelegt, die der niedrigsten Konzentration, die das Holz schützt, und der nächst niederen Konzentration der Reihe, bei der das Holz nicht mehr ausreichend geschützt ist, entsprechen. Es wurde der Grenzwert ohne Belastung der Prüfkörper und der Grenzwert nach genormter Beanspruchung der Prüfkörper durch Auslaugung in destilliertem Wasser ermittelt. Zur Bestimmung des Grenzwertes werden Prüfkörper aus Holz mit abgestuft konzentrieten Tränklösungen von Prüfsubstanzen im Volltränkverfahren getränkt und in Kolleschalen dem Angriff von Reinkulturen holzzerstörender Basidiomyceten bzw. Ascomyceten ausgesetzt.

Tabelle 2

Fungizide Grenzwerte aus Tabelle 1 bezogen auf kg Wirkstoff
pro m$^3$ Holz

| Wirkstoff: | Fluor | | Kupfer | |
|---|---|---|---|---|
| Prüfpilz: | Coniophora puteana | | Chaetomium globosum | |
| Holzschutzmittel | ohne Belastung | nach Auslaugung | ohne Belastung | nach Auslaugung |
| CKP-Salz-Typ[a,e] | 0,7-1,0[b] | 2,5-3,0[b] | 0,25-0,5[c] | 0,3[c] |
| $CuSO_4 \cdot 5H_2O$[a] | - | - | 1[c] | 3,8[c] |
| NaF | 0,15-0,3 | - | - | - |
| Ausführungsbeispiel: 1 | 0,03 | 0,3-0,6 | 0,1-0,3 | < 0,1 |
| 2 | 0,1-0,2 | > 1 | 0,1 | < 0,1 |
| 6 | 0,1 | 0,9 | 0,45 | 0,35 |
| 7 | >0,05(0,15)[d] | 0,5-1,1(0,8) | 0,05 | < 0,15 |
| 9 | >0,1(0,2) | 0,4-0,7 | 0,15-0,2[f] | 0,3-0,6 |

Anmerkungen zu Tabelle 2:

a) bis d) siehe Anmerkungen zu Tabelle 1

e) umgerechnet für ein CKF-Salz mit einem Kupfergehalt von 5 %
und Fluorgehalt von 25 %

f) Angaben für Wirkstoff Zink

Tabelle 3

Korrosionswirkung von Holzschutzmittellösungen auf Eisen- und Kupferwerkstoffe (Dauertauchversuch)[2]

| Holzschutzmittellösung | Flächen-Masseverlust nach 14 Tagen $[mg/cm^2]$ |
|---|---|
| **Korrosion gegenüber Eisen:** | |
| destilliertes Wasser | 1,8 |
| Ausführungsbeispiel: 1 | 1,3 |
| 7 | 145 (Cu-Abscheidung) |
| 8 | 0,1 |
| 9 | 1,4 |
| 10 | 21 |
| **Korrosion gegenüber Kupfer:** | |
| Ammoniak (2,0 %ig) | 28 |
| Ausführungsbeispiel: 1 | 45 |
| 9 | 75 |
| 3 | 3,9 |

[2] Die Prüfung der Korrosionswirkung auf Eisen- und Kupfer- werkstoffe wurde im Dauertauchversuch nach der Normvor- schrift TGL 18973/01 durchgeführt. Eisen- bzw. Kupferbleche wurden in 0,5 l der Holzschutzmittellösung eingehängt und 14 Tage bei 20 °C darin aufbewahrt. Danach wurde der Flächen- Masseverlust ermittelt.

**Ansprüche**

1. Holzschutzmittel auf der Basis anorganischer Verbindungen, die Monofluoromonophosphationen sowie gegebenenfalls andere Zusatzstoffe enthalten, zum Schutz von Holz und Holzwerkstoffen, unabhänig vom Feuchtegehalt, dadurch gekennzeichnet, daß das auslaugstabile, gegen holzzerstörende Insekten und Pilze, einschließlich Moderfäulepilze, wirksame Holzschutzmittel in Form einer wäßrigen, tränkstabilen Lösung vorliegt und

0,5 bis 10 Masse-%

von einem oder mehreren der Bestandteile Ammoniak, Salz-, Salpeter-, Schwefel-, Flußsäure, Alkali- oder Ammoniumhydrogenfluorid und als wirksame Komponente

a) ein Kupfer(II)-, Zink-, Nickel-, Kobalt-, Eisen-, Magnesium- und/oder Mangansalz der Monofluorophosphorsäure $H_2PO_3F$ mit einem Gehalt von

0,5 bis 20 Masse-% oder

b) ein Alkali- und/oder Ammoniumsalz der Monofluorophosphorsäure in Gegenwart eines Zink-, Nickel-, Kobalt-, Eisen- und/oder Mangansalzes der Salz-, Salpeter-oder Schwefelsäure, wobei der Gehalt der wirksamen Komponente zwischen

1,0 und 30,0 Masse-%

beträgt, oder

c) ein Alkali- und/oder Ammoniumsalz der Monofluorophosphorsäure in Gegenwart eines Cu(II)-Salzes der Salz-, Salpeter- oder Schwefelsäure in einem Verhältnis $Cu^{2+}$ zu $PO_3F^{2-}$ von 0,5 bis 2 : I, wobei der Gehalt der wirksamen Komponente

1,0 bis 30,0 Masse-%

beträgt, enthält.

2. Mittel nach Anspruch 1 a), dadurch gekennzeichnet, daß es Kupfer-($Cu^{2+}$)- und Zink-($Zn^{2+}$)- und Monofluorophosphat-($PO_3F^{2-}$)-Ionen in einem Verhältnis von ($Cu^{2+} + Zn^{2+}$) : $PO_3F^{2-}$ = 0,5 bis 2 : 1, vorzugsweise 1 : 1, und in einem Verhältnis von $Zn^{2+}$ : $Cu^{2+}$ = 10 bis 60 : 90 bis 40, vorzugsweise 20 bis 50 : 80 bis 50, enthält.

3. Mittel nach Anspruch 2, dadurch gekennzeichnet, daß es als wirksame Substanzen die Verbindungen Kalium-dikupferhydroxid-bis(monofluorophosphat)-1-Hydrat $Cu_2K(OH)(PO_3F)_2 \cdot H_2O$ und Zinkmonofluorophosphat-2,5-Hydrat $ZnPO_3F \cdot 5/2\ H_2O$ enthält.

4. Mittel nach Anspruch 2, dadurch gekennzeichnet, daß es als wirksame Substanz die Mischkristall-Verbindung $(Cu_{2-m}\ Zn_m)\ K\ (OH)\ (PO_3F)_2 \cdot H_2O$ enthält, in der ausgehend vom Wirtsgitter des $Cu_2K-(OH)(PO_3F)_2 \cdot H_2O$ das Kupfer teilweise durch Zink substituiert ist und wobei $0<m<1$ ist.

5. Holzschutzmittel nach Anspruch 2, dadurch gekennzeichnet, daß es als wirksame Substanzen ein Alkali- und/oder Ammoniumsalz der Monofluorophosphorsäure und ein Kupfer- und Zinksalz der Salz-, Salpeter- und/oder Schwefelsäure enthält.

6. Mittel nach Anspruch 1, dadurch gekennzeichnet, daß es als Metallsalz ein Cu-, Zn- und Mg-Salz enthält.

7. Mittel nach Anspruch 1 (c), dadurch gekennzeichnet, daß das Verhältnis von $Cu^{2+}$ zu $PO_3F^{2-}$ 1:1 beträgt

8. Mittel nach einem der Ansprüche 1 bis 7, dadurch gekennzeichnet, daß der Gehalt der wirksamen Komponente Cu-, Cu-K-, Cu-Zn-K-, Zn-, Ni-, Co-, Fe-, Mg- und/oder Mn-Salz der Monofluorophosporsäure zwischen 2 bis 15 Masse-%, vorzugsweise 2 bis 8-Masse-%, beträgt.

9. Mittel nach einem der Ansprüche 1 bis 7, dadurch gekennzeichnet, daß der Gehalt der wirksamen Komponente Alkali- und/oder Ammonium-Salz der Monofluorophosphorsäure und Kupfer(II)-, Zink-, Nickel-, Kobalt-, Eisen- und/oder Mangan-Salz der Salz-, Salpeter- oder Schwefelsäure 2,0 bis 15,0 Masse-% beträgt.

**10.** Mittel nach einem der Ansprüche 1 bis 9, dadurch gekennzeichnet, daß die wäßrige Lösung zwischen 1,0 und 5,0 Masse-%, vorzugsweise 1 bis 3 Masse-%, Ammoniak, Salz-, Salpeter-, Schwefel- oder Flußsäure oder Alkali- oder Ammoniumhydrogenfluorid enthält.

**Claims**

**1.** Wood protection agent on the basis of inorganic compounds which contain monofluoromonophosphate ions and also optionally other additives, for the protection of wood and timber materials, independent of the moisture content, characterised in that the leaching-stable wood protection agent which is effective against wood-destroying insects and fungi, including soft rot, is in the form of an aqueous, impregnation-stable solution and contains

0.5 to 10% mass

of one or more of the constituents ammonia, hydrochloric acid, nitric acid, sulphuric acid, hydrofluoric acid, alkali or ammonium hydrogen fluoride and as an active constituent

a) a copper(II), zinc, nickel, cobalt, iron, magnesium and/or manganese salt of monofluorophosphoric acid $H_2PO_3F$ with a content of

0.5 to 20% mass, or

b) an alkali and/or ammonium salt of monofluorophosphoric acid in the presence of a zinc, nickel, cobalt, iron and/or manganese salt of hydrochloric acid, nitric acid or sulphuric acid, with the content of the active constituent being between

1.0 and 30.0% mass, or

c) an alkali and/or ammonium salt of monofluorophosphoric acid in the presence of a Cu(II) salt of hydrochloric acid, nitric acid or sulphuric acid in a ratio of $Cu^{2+}$ to $PO_3F^{2-}$ of 0.5 to 2 : 1, the content of the active constituent being

1.0 to 30.3% mass.

**2.** Agent according to Claim 1 a), characterised in that it contains copper ($Cu^{2+}$) and zinc ($Zn^{2+}$) and monofluorophosphate ($PO_3F^{2-}$) ions in a ratio of ($Cu^{2+}$ + $Zn^{2+}$) : $PO_3F^{2-}$ = 0.5 to 2 : 1, preferably 1 : 1, and in a ratio of $Zn^{2+}$ : $Cu^{2+}$ = 10 to 60 : 90 to 40, preferably 20 to 50 : 80 to 50.

**3.** Agent according to Claim 2, characterised in that it contains as active substances the compounds potassium di-copper hydroxide-bis(monofluorophosphate)-1-hydrate $Cu_2K(OH)(PO_3F)_2 \cdot H_2O$ and zinc monofluorophosphate-2,5-hydrate $ZnPO_3F \cdot 5/2\ H_2O$.

**4.** Agent according to Claim 2, characterised in that it contains as active substance the mixed crystal compound $(Cu_{2-m}\ Zn_m)\ K\ (OH)\ (PO_3F)_2 \cdot H_2O$, in which, departing from the host lattice of the $Cu_2K(OH)(PO_3F)_2 \cdot H_2O$, the copper is partially substituted by zinc and whereby $0 < m < 1$.

**5.** Wood protection agent according to Claim 2, characterised in that it contains as active substances an alkali and/or ammonium salt of monofluorophosphoric acid and a copper and zinc salt of hydrochloric acid, nitric acid and/or sulphuric acid.

**6.** Agent according to Claim 1, characterised in that it contains a Cu, Zn and Mg salt as the metal salt.

**7.** Agent according to Claim 1 (c), characterised in that the ratio of $Cu^{2+}$ to $PO_3F^{2-}$ is 1 : 1.

**8.** Agent according to one of Claims 1 to 7, characterised in that the content of the active constituent Cu, Cu-K, Cu-Zn-K, Zn, Ni, Co, Fe, Mg and/or Mn salt of monofluorophosphoric acid is between 2 and 15% mass, preferably 2 to 8% mass.

9. Agent according to one of Claims 1 to 7, characterised in that the content of the active constituent alkali and/or ammonium salt of monofluorophosphoric acid and copper(II), zinc, nickel, cobalt, iron and/or manganese salt of hydrochloric acid, nitric acid or sulphuric acid is 2.0 to 15.0% mass.

10. Agent according to one of Claims 1 to 9, characterised in that the aqueous solution contains between 1.0 and 5.0% mass, preferably 1 to 3% mass, ammonia, hydrochloric acid, nitric acid, sulphuric acid or hydrofluoric acid or alkali or ammonium hydrogen fluoride.

**Revendications**

1. Agent protecteur du bois à base de composés inorganiques, qui contient des ions monofluoromonophosphate ainsi qu'éventuellement d'autres additifs, destiné à la protection du bois et de matériaux en bois, indépendamment de la teneur en humidité, caractérisé en ce que l'agent protecteur du bois, qui est stable au lessivage et est actif contre les insectes et les champignons destructeurs du bois, y compris les champignons saprogènes (qui provoquent la pourriture), se trouve à l'état d'une solution aqueuse, stable lors de l'imprégnation et contient
0,5 à 10% en masse
d'un ou de plusieurs des constituants suivants: ammoniaque, acide chlorhydrique, acide nitrique, acide sulfurique, acide fluorhydrique, hydrogénofluorure de métal alcalin ou d'ammonium et, comme composés actifs,
a) un sel de cuivre (II), de zinc, de nickel, de cobalt, de fer, de magnésium et/ou de manganèse de l'acide monofluorophosphorique $H_2PO_3F$, en une teneur de
0,5 à 20% en masse, ou
b) un sel de métal alcalin et/ou d'ammonium de l'acide monofluorophosphorique en présence d'un sel de zinc, de nickel, de cobalt, de fer et/ou de manganèse de l'acide chlorhydrique, de l'acide nitrique ou de l'acide sulfurique, la teneur en composé actif étant comprise entre
1,0 et 30,0% en masse, ou
c) un sel de métal alcalin et/ou d'ammonium de l'acide monofluorophosphorique en présence d'un sel de Cu (II) de l'acide chlorhydrique, de l'acide nitrique ou de l'acide sulfurique en un rapport $Cu^{2+}$ à $PO_3F^{2-}$ de 0,5 à 2:1, la teneur en composant actif étant de
1,0 à 30,0% en masse.

2. Agent suivant la revendication 1a) caractérisé en ce qu'il contient des ions cuivre ($Cu^{2+}$), zinc ($Zn^{2+}$) et monofluorophosphate ($PO_3F^{2-}$) dans un rapport de ($Cu^{2+}$ + $Zn^{2+}$):$PO_3F^{2-}$ = 0,5 à 2:1, de préférence 1:1, et dans un rapport de $Zn^{2+}$:$Cu^{2+}$ = 10 à 60:90 à 40, de préférence de 20 à 50:80 à 50.

3. Agent suivant la revendication 2 caractérisé en ce qu'il contient comme substances actives les composés potassium-dicuivre-hydroxyde-bis(monofluorophosphate)-1-hydrate $Cu_2K(OH)(PO_3F)_2.H_2O$ et le zinc-monofluorophosphate-2,5 hydrate

$ZnPO_3F.\frac{5}{2}H_2O$

4. Agent suivant la revendication 2 caractérisé en ce qu'il contient comme substance active le composé cristallin mixte

$(Cu_{2-m}Z_m)K(OH)(PO_3F)_2.H_2O$

dans lequel, en partant du réseau cristallin hôte du $Cu_2K(OH)(PO_3F)_2.H_2O$, le cuivre est partiellement substitué par le zinc, avec $0 < m < 1$.

5. Agent protecteur du bois suivant la revendication 2 caractérisé en ce qu'il contient comme substances actives un sel de métal alcalin et/ou d'ammonium de l'acide monofluorophosphorique et un sel de cuivre et de zinc de l'acide chlorhydrique, de l'acide nitrique et/ou de l'acide sulfurique.

6. Agent suivant la revendication 1 caractérisé en ce qu'il contient comme sel métallique, un sel de Cu, de Zn et de Mg.

7. Agent suivant la revendication 1(c) caractérisé en ce que le rapport entre $Cu^{2+}$ et $PO_3F^{2-}$ est de 1:1.

8. Agent suivant l'une des revendications 1 à 7 caractérisé en ce que la teneur en composants actifs consistant en sels de Cu, de Cu-K, de Cu-Zn-K, de Zn, de Ni, de Co, de Fe, de Mg et/ou de Mn de l'acide monofluorophosphorique est comprise entre 2 et 15% en masse, de préférence 2 à 8% en masse.

9. Agent suivant l'une des revendications 1 à 7 caractérisé en ce que la teneur en composants actifs consistant en sel de métal alcalin et/ou d'ammonium de l'acide monofluorophosphorique et en sel de cuivre (II), de zinc, de nickel, de cobalt, de fer et/ou de manganèse de l'acide chlorhydrique, nitrique ou sulfurique est de 2,0 à 15,0% en masse.

10. Agent suivant l'une des revendications 1 à 9 caractérisé en ce que la solution aqueuse contient entre 1,0 et 5,0% en masse, de préférence entre 1 et 3% en masse, d'ammoniaque, d'acide chlorhydrique, d'acide nitrique, d'acide sulfurique ou d'acide fluorhydrique ou d'hydrogénofluorure de métal alcalin ou d'ammonium.